# EUROPÄISCHE PATENTANMELDUNG

(11) **EP 1 184 214 A2**
(43) Veröffentlichungstag der Anmeldung: **06.03.2002**
(21) Anmeldenummer: 01121162.0
(22) Anmeldetag: 04.09.2001
(51) Int. Cl.: B60G 17/00

(54) **Aktuator zur aktiven Fahrwerksregelung**

(30) Priorität: 04.09.2000 DE 10043711
(71) Anmelder: Sachsenring Fahrzeugtechnik GmbH, 08058 Zwickau (DE)
(72) Erfinder: Voy, Christian, Prof. Dr., 29549 Bad Brevensen, OT G (DE); Sammet, Gernot, Dipl.-Ing., 08149 Mülsen St. Nicolas (DE); Freund, Wolfgang, Dr.-Ing., 08428 Langenbernsdorf (DE); Besnault, Vianney, Dipl.-Ing., 08058 Zwickau (DE); Schulze, Jürgen, Dipl.-Ing., 09122 Chemnitz (DE)
(74) Vertreter: Rumrich, Gabriele

(57) **Zusammenfassung**

Die Erfindung betrifft einen Aktuator zur aktiven Fahrwerksregelung, der mit dem am Rad (6) des Fahrzeuges befestigten Lenker (5) verbunden ist, unter Verwendung eines ein Drehmoment erzeugenden Stellgliedes, wobei das Stellglied erfindungsgemäß zwischen Aufbau (3) und Lenker (5) angeordnet ist und ein den Wank- und Nickausgleich gewährleistendes Drehmoment auf den Lenker (5) überträgt.

## Beschreibung

Die Erfindung betrifft einen Aktuator zur aktiven Fahrwerksregelung, insbesondere zur Kompensation der Wank- und Nickbewegung eines Kraftfahrzeuges.
Es sind zahlreiche Systeme zum Ausgleich der Wank- und Nickbewegung von Fahrzeugen bekannt. Die bisherigen Lösungen beinhalten dabei jeweils ein Bauelement für den Wank- und/oder Nickausgleich, ein Element für die Schwingungsdämpfung sowie ein Element für die Schwingungstilgung.
In DE 44 28 605 A1 wird dabei ein Hydrauliksystem für ein aktives Fahrwerk beschrieben, bei welchem Aktuatoren mit jeweils einem Druckspeicher für eine Vorderachse und eine Hinterachse des Fahrzeuges vorgesehen sind, sowie mit einer Pumpe zur Versorgung der Aktuatoren und einem entsprechenden Leitungssystem. Weiterhin ist ein Zusatzdruckspeicher vorgesehen, der bei im Wesentlichen horizontaler Fahrzeugaufbaulage gleichzeitig mit den Aktuatoren einer Fahrzeugachse verbunden und bei Kurvenfahrt von dem kurvenäußeren Aktuator getrennt und mit dem kurveninneren Aktuator verbunden ist. Den Aktuatoren ist eine separate verstellbare Dämpfereinrichtung zugeordnet, die bei Kurvenfahrt für den kurveninneren Aktuator auf eine stärkere Dämpfung eingestellt wird.
DE 196 13 769 A1 beschreibt ein Zweikreishydrauliksystem für eine aktive Fahrwerksregelung zur Unterdrückung der Rollbewegung eines Kraftfahrzeuges (Wankausgleich) mittels eines verstellbaren Stabilisators jeweils an einer Kraftfahrzeugvorderachse und Kraftfahrzeughinterachse. Ein aktives Federungssystem, dessen zwischen gefederter und ungefederter Masse angeordnetes Feder- bzw. Abstützaggregat jeweils ein passives ungesteuertes Federelement sowie ein dazu in Reihe angeordnetes hydraulisches Verdrängeraggregat mit regelbarer Verstellung aufweist, zeigt DE 44 14 022 A1. Durch Anordnung von Weggebern für die Erfassung der Hubstellung der gefederten Masse relativ zur ungefederten Masse sowie des Hubes des hydraulischen Verdrängeraggregates soll die Möglichkeit geschaffen werden, eine Regelung der Abstützkräfte durchzuführen.
Diese hydraulisch arbeitenden Regelsysteme weisen den Nachteil auf, daß aufgrund der Kompressibilität von Luft eine oft ungenügende Schnelligkeit des Systems zum Ausgleich der Wank- oder Nickbewegungen bzw. bei der Schwingungsdämpfung zu verzeichnen ist.
Es sind weiterhin Aktuatoren in der Form von Schwenkmotoren zum Ausgleich von Wankbewegungen bekannt. Die in DE 197 54 539 A1 beschriebene Lösung weist dabei vorn und hinten geteilte Stabilisatorhälften auf, die durch die Schwenkmotoren verdreht werden. Der Wankausgleich ist dabei lediglich im Bereich der Verdrehsteifigkeit der Stabilisatoren möglich, ein Nickausgleich kann nicht erfolgen.
Aus DE 1 201 698 B ist ein Aktuator zur aktiven Fahrwerksregelung bekannt, der mit dem Lenker verbunden ist und unter Verwendung eines ein Drehmoment erzeugenden Stellgliedes, welches ein dem Wank- und Nickausgleich entsprechendes Drehmoment auf den Lenker überträgt. Lenker und Stellglied sind dabei in unterschiedlichen Punkten am Aufbau gelagert. Diese Lösung ist relativ aufwändig.

Aufgabe der Erfindung ist es, einen Aktuator zur aktiven Fahrwerksregelung zu schaffen, welcher insbesondere die Kompensation der Wank- und Nickbewegung bewirkt, und bei einer einfachen Bauweise eine schnelle Reduzierung der Aufbaubeschleunigung und der dynamischen Radlastschwankungen gewährleistet.

Diese Aufgabe wird erfindungsgemäß mit den Merkmalen des ersten Patentanspruchs gelöst.
Der Aktuator zur aktiven Fahrwerksregelung ist dabei bekannter Weise mit dem am Rad und am Aufbau des Fahrzeuges befestigten Lenker verbunden und beinhaltet ein, ein Drehmoment erzeugendes, Stellglied. Erfindungsgemäß ist das Stellglied zwischen Aufbau und Lenker angeordnet und überträgt ein dem Wank- und Nickausgleich entsprechendes Drehmoment auf den Lenker. Das Stellglied ist dabei in Form eines Schwenkmotors ausgebildet und ist als Lagerung des Lenkers am Aufbau angeordnet, wobei der Schwenkhebel des Schwenkmotors gleichzeitig den Lenker bildet, so daß das durch den Schwenkmotor erzeugte Drehmoment auf den als Lenker wirkenden Schwenkhebel übertragen wird.
Es ist jedoch auch möglich, mit dem Schwenkhebel eine Koppel mit ihrem einen Ende in einem ersten Drehpunkt drehbeweglich zu verbinden, wobei entweder der Schwenkmotor am Aufbau befestigt und die Koppel an ihrem anderen Ende mit dem Lenker drehbeweglich oder der Schwenkmotor am Lenker befestigt und die Koppel an ihrem anderen Ende mit dem Aufbau in einem zweiten Drehpunkt drehbeweglich verbunden ist, so dass ebenfalls das durch den Schwenkmotor erzeugte Drehmoment auf den Lenker übertragen wird.
Durch eine Drehbewegung des Schwenkmotors wird ein Drehmoment auf den Lenker übertragen und eine Wank- oder Nickbewegung des Fahrzeuges durch Niveauänderung zwischen Lenker und Aufbau des Fahrzeuges ausgeglichen, und somit die Bewegung der Karosserie so geregelt, dass möglichst ständig ein gleichbleibender Abstand der Karosserie zur Fahrbahn vorhanden ist. Weiterhin kann durch definierte Druckbeaufschlagung (und somit Drehbewegung) des Schwenkmotors entsprechend der Lenkerschwingung ein Drehmoment erzeugt werden, welches diese dämpft und möglichst kompensiert.
Der Drehpunkt des Schwenkmotors und der mit dem Schwenkmotor in Verbindung stehende Lenker sind dabei bevorzugt in einem gemeinsamen Drehpunkt am Aufbau gelagert.
Um die erforderliche Aufbaufederung zu gewährleisten, sind zwischen Schwenkmotor und Aufbau und/oder zwischen Schwenkmotor und Lenker entsprechend wirkende Federelemente angeordnet. Diese Federelemente können komplett als Aufbaufederung wirken oder auch Teile einer Aufbaufederung ersetzen. Es ist z.B. möglich, diese Federelemente als Drehfedern auszubilden oder als Luft- oder Hydraulikfedern in den Regelkreis des Schwenkmotors zu integrieren.

Mit der Erfindung wird eine einfache elegante Lösung eines Aktuators zur aktiven Fahrwerksregelung geschaffen, welcher die Kompensation bewirkt.

Die Erfindung wird nachfolgend anhand von Ausführungsbeispielen und zugehörigen Zeichnungen näher erläutert.

### Es zeigen:

Fig. 1: Prinzipdarstellung des am Aufbau 3 befestigten Schwenkmotors 1,
Fig. 2: dreidimensionale Ansicht gem. Fig. 1.

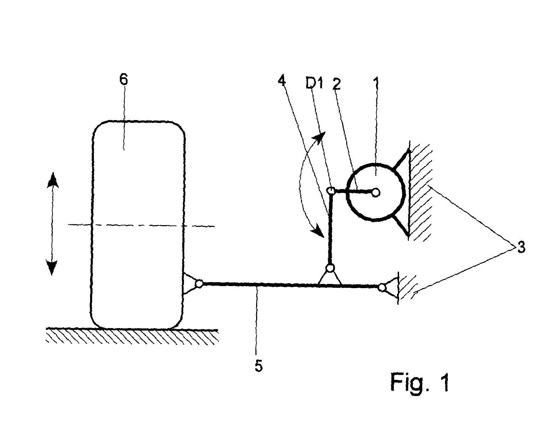

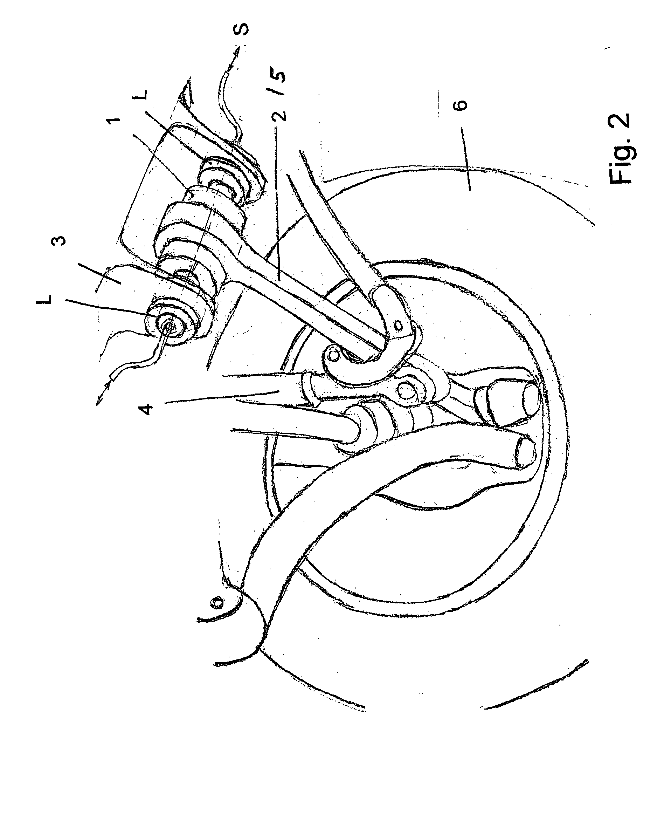

Gem. Fig. 1 und 2 wird ein Stellelement in Form eines Schwenkmotors 1 als Aktuator zur aktiven Fahrwerksregelung verwendet. Der Stellmotor 1 ist am Aufbau 3 befestigt und weist einen Schwenkhebel 2 auf, der mit einem Ende am Schwenkmotor 1 und mit dem anderen Ende mit einer Koppel 4 schwenkbar verbunden ist. Die Koppel 4 ist wiederum am Lenker 5 schwenkbar gelagert. Der Lenker 5 ist bekannter Weise einerseits am Rad 6 und andererseits am Aufbau 3 angelenkt.
In Fig. 2 ist ein zum Schwenkmotor 1 führender Hydraulikschlauch S angedeutet. Weiterhin ist aus dieser Darstellung ersichtlich, dass der Schwenkmotor 1 über Federelemente L am Aufbau 3 gelagert ist. Der Lenker 5 ist dabei am Außendurchmesser des Schwenkmotors 1 befestigt und bildet somit den Schwenkhebel 2 des Schwenkmotors 1, wobei Schwenkmotor 1 und das daran befestigte Ende des Lenkers 5 den gleichen Drehpunkt aufweisen.
Bei einer Wank- oder Nickbewegung des Fahrzeuges wird über den hydraulisch angetriebenen Stellmotor 1 eine Drehbewegung und somit über Schwenkhebel 2 (Lenker 5) und Koppel 4 ein Drehmoment erzeugt, welches auf den Lenker 5 wirkt und die Wank- oder Nickbewegung ausgleicht, so daß auch bei Kurvenfahrten und bei Beschleunigungs- und Bremsvorgängen eine im wesentlichen horizontale Lage des Fahrzeugaufbaus gewährleistet wird. Gleichzeitig kann durch ein, den Lenkerschwingungen entsprechendes, wechselndes Drehmoment, welches durch den Schwenkmotor erzeugt wird, eine Dämpfung der Lenkerschwingungen bzw. der Schwingungen des Rades erzielt werden. Dies kann beispielsweise durch entsprechende schnelle Änderung des Hydraulikdruckes im Schwenkmotor realisiert werden.
Mit der überraschend einfachen erfindungsgemäßen Lösung ist es erstmalig möglich mit einem Aktuator direkt Einfluß auf hochfrequente Radschwingungen zu nehmen und gleichzeitig Wank- und Nickbewegungen auszugleichen.

## Patentansprüche

1. Aktuator zur aktiven Fahrwerksregelung, wobei der Aktuator mit dem am Rad (6) des Fahrzeuges befestigten Lenker (5) verbunden ist, unter Verwendung eines ein Drehmoment erzeugenden Stellgliedes, **dadurch gekennzeichnet, dass** das Stellglied zwischen Aufbau (3) und Lenker (5) angeordnet ist und ein den Wank- und Nickausgleich gewährleistendes Drehmoment auf den Lenker (5) überträgt.

2. Aktuator nach Anspruch 1, **dadurch gekennzeichnet, dass** das Stellglied in Form eines Schwenkmotors (1) ausgebildet ist.

3. Aktuator nach Anspruch 1 oder 2, **dadurch gekennzeichnet, dass** das Stellglied als Lagerung des Lenkers (5) am Aufbau (3) ausgebildet ist, wobei ein Schwenkhebel (2) des Schwenkmotors (1) den Lenker (5) bildet, so dass das durch den Schwenkmotor (1) erzeugte Drehmoment auf den als Lenker (5) wirkenden Schwenkhebel (2) übertragen wird.

4. Aktuator nach Anspruch 3, **dadurch gekennzeichnet, dass** das Stellglied und der Lenker (5) in einem gemeinsamen Drehpunkt am Aufbau (3) gelagert sind.

5. Aktuator nach einem oder mehreren der Ansprüche 1 bis 4, **dadurch gekennzeichnet, dass** zwischen Schwenkmotor (1) und Aufbau (3) und/oder zwischen Schwenkmotor (1) und Lenker (5) als Aufbaufederung wirkende Federelemente angeordnet sind.

6. Aktuator nach Anspruch 5, **dadurch gekennzeichnet, dass** die Federelemente die Aufbaufederung bilden oder Teile der Aufbaufederung ersetzen.

7. Aktuator nach Anspruch 5 oder 6, **dadurch gekennzeichnet, dass** die Federelemente als Drehfedern oder als in den Regelkreis des Schwenkmotors (1) integrierte Luftfedern ausgebildet sind.

8. Aktuator nach einem oder mehreren der Ansprüche 1 bis 7, **dadurch gekennzeichnet, dass** mit dem Schwenkhebel (2) des Schwenkmotors (1) eine Koppel (4) mit ihrem einen Ende in einem Drehpunkt (D1) drehbeweglich verbunden ist, wobei der Schwenkmotor (1) am Aufbau (3) befestigt und die Koppel (4) an ihrem anderen Ende mit dem Lenker (5) drehbeweglich verbunden ist, so dass das durch den Schwenkmotor (1) erzeugte Drehmoment auf den Lenker (5) übertragen wird.
